Europäisches Patentamt

European Patent Office

Office européen des brevets

(19)

(11) **EP 1 486 885 A2**

(12) **EUROPEAN PATENT APPLICATION**

(43) Date of publication:
**15.12.2004 Bulletin 2004/51**

(51) Int Cl.⁷: **G06F 17/27**

(21) Application number: **04011282.3**

(22) Date of filing: **12.05.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **12.05.2003 US 435036**

(71) Applicant: **Xerox Corporation
Rochester, New York 14644 (US)**

(72) Inventors:
• **Riezler, Stefan
  San Francisco CA 94117 (US)**
• **Crouch, Richard S.
  Cupertino CA 94125 (US)**
• **King, Tracy H.
  Mountain View CA 94043 (US)**
• **Zaenen, Annie E.
  Redwood City CA 94062 (US)**
• **Vasserman, Alexander
  Malden MA 02148 (US)**

(74) Representative: **Grünecker, Kinkeldey,
Stockmair & Schwanhäusser Anwaltssozietät
Maximilianstrasse 58
80538 München (DE)**

(54) **Method and system for grammatical text condensation**

(57)   Techniques are provided for determining grammatical condensed text structures. Packed structures are determined for text structures based on a parsing grammar. Reduced packed structures are determined by applying transformation rules to packed and/or unpacked elements of the packed structures. A disambiguation model is applied to the reduced packed structure to determine candidate structures. A grammatically correct generation grammar is applied to the candidate structures to determine grammatical condensed text structures.

FIG. 2

EP 1 486 885 A2

**Description**

BACKGROUND OF THE INVENTION

1. Field of Invention

This invention relates to condensing text structures.

2. Description of Related Art

Conventional text condensation systems employ summary term selection and ordering based on n-grams and bag-of-word models. See for example, Witbrock et al., "Ultra Summarization: A Statistical Approach to Generating Highly Condensed Non-Extractive Summaries" in Proceedings of the 22nd ACM SIGIR Conference on Research and Development in Information Retrieval, Berkeley, 1999.

Knight et al., in "Statistics based summarization", Proceedings of the 17th National Conference on Artificial Intelligence (AAAI-2000), Austin, Texas, 2000, and Hongyan Jing in "Sentence Reduction for Automatic Text Summarization", Proceedings of the 6th Applied Natural Language Processing Conference (ANLP'00) Seattle, WA 2000 disclose conventional text condensation systems based on linguistic parsing and generation. These conventional systems select text substructures for inclusion and/or deletion based on probability models learned from a corpus of parses for sentences and the associated summaries. Although the summaries produced by these conventional text reduction or condensation systems are indicative of content, the summaries are difficult to read due to the lack of grammaticality.

SUMMARY OF THE INVENTION

The systems and methods according to this invention as defined in claims 1 and 10 provide for the generation of grammatical condensed text structures. Systems and methods of this invention provide for the assignment of packed parse structures to a text structure using a parsing grammar. Transformations such as condensation or simplification are then applied to reduce the packed structure. Candidate structures are determined based on disambiguation of the reduced packed structures. The systems and methods of this invention also provide for determining grammatical condensed text structures, such as sentences, from the candidate structures based on a grammatically correct generation grammar.
In one embodiment of the method, the packed structure is at least one of: a lexical functional grammar, a phrase structure grammar and a dependency grammar.
In a further embodiment the text structure is at least one of a sentence, a paragraph, selected portions of a text and a discourse.
In a further embodiment text structures are selected based on at least one of a discourse grammar and a statistical model.
In one embodiment of the system of claim 10, the parsing grammar circuit determines a parsing grammar from at least one of: a lexical functional grammar, a phrase structure grammar and a dependency grammar.
In a further embodiment the generation grammar circuit determines a generation grammar from at least one of: a lexical functional grammar, a phrase structure grammar and a dependency grammar.
In a further embodiment the transformation rules perform are at least one of: adding, deleting, modifying and linguistically transforming.
In a further embodiment the candidate structures circuit determines candidate structures based on at least one of: a statistical, a semantic, a syntactic and a lexical disambiguation.
In a further embodiment the packed structure circuit determines packed structures based on at least one of: a text structiure, a sentencial structure, a paragraph structure. In a further embodiment the processor applies transformation rules to elements of the packed structure.
In a further embodiment the elements of the packed structure are linguistic facts and linguistic context.
In a further embodiment the transformations rules are applied directly to the linguistic facts and linguistic context of the packed structure.
In a further embodiment the processor unpacks the linguistic facts and linguistic context of the packed structure and applies the transformation rules to the determined linguistic facts and linguistic context.
In a further aspect of the invention a computer readable storage medium comprises: computer readable program code embodied on the computer readable storage medium, the computer readable program code usable to program a computer for grammatical text condensation comprising the steps of:

determining at least one text structure for a text;

determining a parsing grammar, a generation grammar and transformation rules;
determining a packed structure based on the determined text structures;
determining a reduced packed structure based on the transformations of the packed structure;
determining candidate structures based on the reduced packed structure and a disambiguation model;
determining grammatical condensed text structures based the generation grammar and the candidate structures.

According to still another aspect of the invention a carrier wave encoded to transmit a control program is provided that is useable to program a computer for grammatical text condensation, to a device for executing the program, the control program comprising:

instructions determining at least one text structure for a text;
instructions determining a parsing grammar, a generation grammar and transformation rules;
instructions determining a packed structure based on the determined text structures;
instructions determining a reduced packed structure based on the transformations of the packed structure;
instructions determining candidate structures based on the reduced packed structure and a disambiguation model;
instructions determining grammatical condensed text structures based the generation grammar and the candidate structures.

BRIEF DESCRIPTION OF THE DRAWINGS

Fig. 1 is an overview of an exemplary grammatical text condensation system according to this invention;
Fig. 2 is a flowchart of an exemplary method for grammatical text condensation according to this invention;
Fig. 3 is an exemplary grammatical text condensation system according to this invention;
Fig. 4 is an expanded flowchart of an exemplary method for transforming packed structures according to this invention;
Fig. 5 is an expanded flowchart of an exemplary method of candidate structure determination according to this invention;
Fig. 6 is a flowchart of an exemplary method of determining candidate text structures according to this invention;
Fig. 7 shows an exemplary data structure for storing transformation rules according to this invention;
Fig. 8 shows an exemplary sentence to be condensed;
Fig. 9 shows an exemplary un-packed structure;
Fig. 10 shows an exemplary packed structure according to this invention;
Fig. 11 shows a first exemplary candidate structure according to this invention;
Fig. 12 shows a second exemplary candidate structure according to this invention;
Fig. 13 shows a third exemplary candidate structure according to this invention;
Fig. 14 shows a fourth exemplary candidate structure according to this invention;
Fig. 15 shows an exemplary candidate text data structure according to this invention; and
Fig. 16 shows an exemplary rule trace storage structure according to this invention.

DETAILED DESCRIPTION OF EXEMPLARY EMBODIMENTS

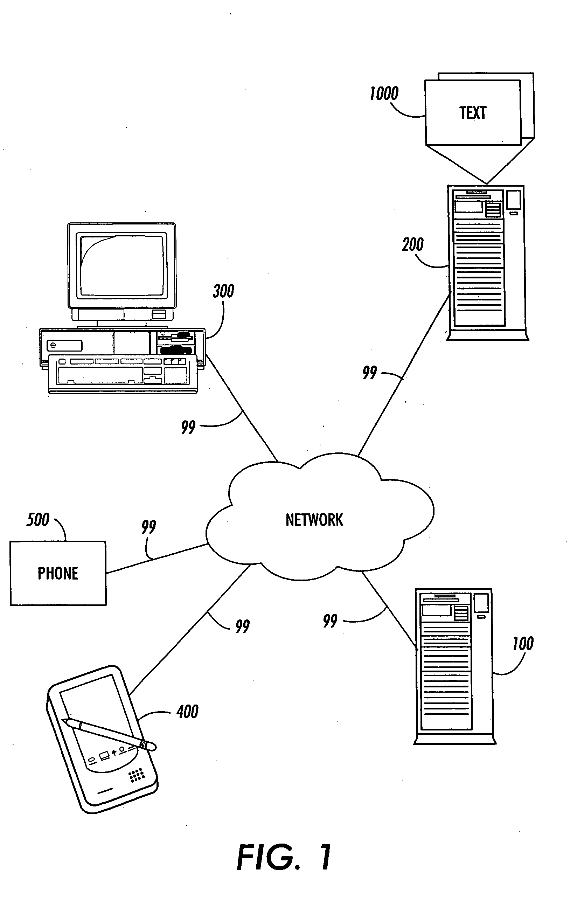

Fig. 1 is an overview of an exemplary grammatical text condensation system according to this invention. A web-enabled personal computer 300, a web-enabled tablet computing device 400 and telephone 500 are connectable to a grammatical text condensation system 100 and an information repository 200 providing access to texts 1000 over communications links 99.
The information repository 200 may include a web server serving encoded in HTML, XML, and/or WML, a digital library providing access to Microsoft Word® and/or Adobe PDF® documents, or any other known or later developed method of providing access to texts 1000.
In a first exemplary embodiment according to this invention, a user of the web-enabled tablet computing device 400 initiates a request for a condensed version of text 1000. In one of the various exemplary embodiments according to this invention, the request for the condensed text is mediated by the grammatical text condensation system 100. The text condensation system 100 acts as a proxy, receiving the request for the condensed version of the text from the user of web-enabled computing device 400. The txt condensations system 100 forwards the request over communications link 99 to the information repository 200.
The information repository 200 retrieves the requested text 1000 and forwards the text 1000 over communications link 99 to the grammatical text condensation system 100. The grammatical text condensation system 100 uses a parsing grammar to determine packed structures associated with the text structures of the requested text 1000.
Transformations are applied to the packed structure to determine a reduced packed structure. Candidate structures are determined based on a disambiguation model of the reduced packed structures. For example, in various exemplary embodiments according to this invention, a stochastic disambiguation model and/or other disambiguation model indicative of likely candidate structures is determined. The stochastic model or predicative model is then applied to the reduced packed structure to select likely candidate structures. It should be noted that in various exemplary embodiments according to this invention, not all candidate structures need necessarily correspond to grammatical English language sentences. A generation grammar is applied to the candidate structures to determine the candidate structures that correspond to grammatical sentences. After generation, candidate structures corresponding to grammatical sentences may be ranked. For example the percentage sentence reduction length may be combined with the ranking of candidates obtained from the stochastic or predictive model. The overall highest ranked text structure derived from the reduced packed structure is selected.

In a second exemplary embodiment according to this invention, the user of the telephone 500 requests a condensed version of the text 1000 contained in information repository 200. The request for the text 1000 is processed by an automatic speech recognition device (not shown), a telephone transcription operator or any other method of recognizing the speech request. The recognized speech request is then forwarded over communications link 99 to the information repository. The information repository 200 receives the request and forwards the text 1000 over communications link 99 to the grammatical text condensation system 100. The grammatical text condensation system 100 determines the text structures. Transformation rules are applied to the text structures to determine reduced packed structures. The resultant reduced packed structures are disambiguated using a disambiguation model and candidate structures determined. In various exemplary embodiments according to this invention, stochastic disambiguation may be used to determine the candidate structures. A grammatically correct generation grammar is used to determine grammatical condensed sentences associated with the candidate structures. The grammatical condensed sentences are transferred over communications links 99 to telephone 500 and output using a speech synthesizer (not shown).

In a third exemplary embodiment according to this invention, a user of web-enabled computer 300 initiates a request for a condensed version of text 1000 in information repository 200. The request is mediated by the grammatical text condensation system 100. For example, the grammatical text condensation system 100 may be used as a proxy server to mediate access to the information repository 200 and provide condensed versions of the requested text 1000. In various other exemplary embodiments according to this invention, the grammatical text condensation system 100 may be incorporated into the information repository 200, incorporated into the web-enabled computer 300 or placed at any location accessible via communications link 99.

The information repository 200 receives the request for the condensed version of text 1000. The information repository 200 then retrieves and forwards the requested text 1000 over communications link 99 to the information condensation system 100. The text condensation system 100 determines a packed structure based on text structures in the text 1000. A reduced packed structure is determined based on the packed structure and transformation rules. A disambiguation or predictive model is used to determine candidate structures based on the reduced packed structure. A grammatically correct generation grammar is applied to the candidate structures to determine grammatical condensed sentences for the text 1000. The grammatically condensed text sentences associated with the condensed version of the requested text 1000 are transferred over communications link 99 and displayed to the user on the web-enabled personal computer 300.

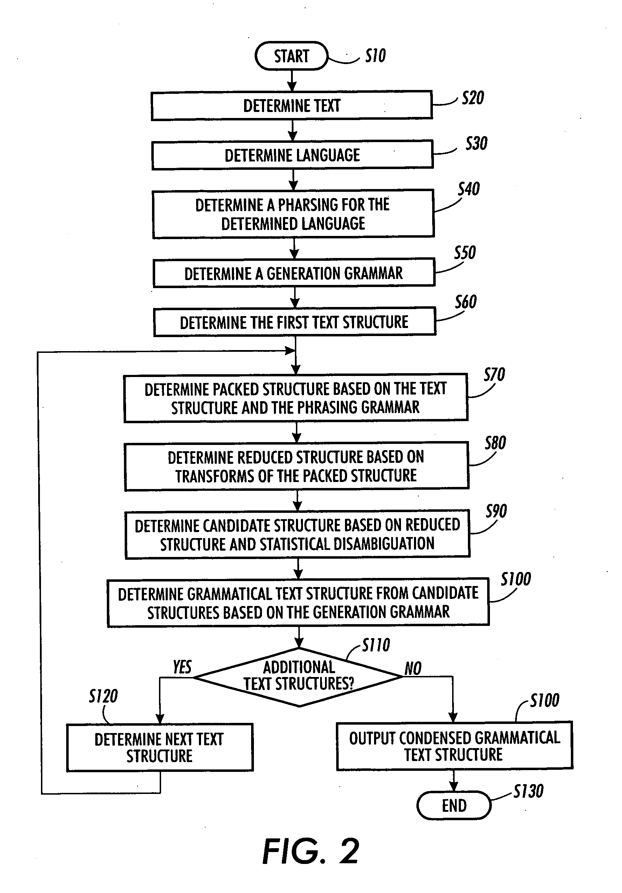

Fig. 2 is a flowchart of an exemplary method for grammatical text condensation according to this invention. The process begins at step S 10 and immediately continues to step S20 where the text to be condensed is determined. The text may be selected from a file, input by the user or determined using any known or later developed selection and/or input method. Control then continues to step S30 where a language characteristic for the text is determined.

In various exemplary embodiments of this invention, the language characteristic of the text may be determined using XML and/or HTML language identification tags, linguistic analysis of the text or any known or later developed method of language determination method. After the language characteristic of the text is determined, control continues to step S40.

In step S40, a parsing grammar is determined. The parsing grammar is determined based on the determined language characteristic, a genre for the text and/or any known or later developed text characteristic. For example, a first parsing grammar based on the "English" language and "newspaper" genre characteristics is selected. A second parsing grammar, based on the "English" language and "scientific publication" genre characteristics is selected to parse English language "BioEngineering" articles. In this way, a parse grammar is selected that recognizes language structures associated with each text. In various other exemplary embodiments according to this invention, the parsing grammar may be a previously determined universal grammar, a grammar based on the text or a grammar determined using any known or later developed characteristic of the text. After the parsing grammar is determined, control continues to step S50.

The generation grammar is determined in step S50. The generation grammar ensures the grammaticality of the generated text structures. In various exemplary embodiments, the generation grammar may be the same as the parsing grammar. For example, any one or combination of a lexical functional grammar, a head-phrase structure grammar, a lexicalized tree adjoining grammar, a combinatory categorical grammar or any known or later developed grammar useful in parsing a text and determining a packed structure may be used in the practice of this invention. A grammatically correct version of the linguistic functional grammar is used as a generation grammar in one of the exemplary embodiments of this invention. However, it will be apparent that any known or later developed grammatical grammar that generates grammatically correct structures may be used for both the parsing and generation portions of this invention. After the generation grammar is determined, control continues to step S60.

In step S60, a first text structure is determined. The structure may include but is not limited to sentences, paragraphs, narratives or any known or later developed linguistic structure. For example, the text may be segmented into sentence level text structures. Grammatical condensed sentences representative of larger text structures such as paragraphs, narratives and the like, may be determined using statistical selection of salient sentences.

In various exemplary embodiments according to this invention, representative sentences may be selected using the discourse based techniques described by Livia Polanyi and Martin Henk van den Berg in U.S. Patent Application Serial No. 09/883,345 and 09/689,779. In various other exemplary embodiments according to this invention, representative sentences for larger text structures may also be selected based on the techniques described in U.S. Patent Nos. 5,778,397 and 5,918,240 to Kupiec et al. and U.S. Patent Nos. 5,689,716 and 5,745,602, to Chen et al. The selected representative sentences for the larger text structures are then condensed using the systems and methods according to this invention.

It will also be apparent that the systems and methods of this invention may be used to provide contextual information to a user engaged in information retrieval tasks. For example, conventional information retrieval systems return portions of text surrounding search terms. These sentence fragments typically impose a high cognitive overhead on the user since they are typically un-grammatical and difficult to read. In contrast, the systems and methods of this invention provide context information in a low cognitive overhead format. That is, since the search terms and associated context information are provided in grammatical sentences, the user can quickly determine the relevance of the retrieved information. After the first text structure or sentence is determined, control continues to step S70.

In step S70, a packed structure is determined based on the determined text structures. In various exemplary embodiments according to this invention, the packed f-structure representation of the Xerox XLE environment is used as the packed representation of the text. It will be apparent that although the packed structure facilitates processing, any known or later developed text representation may be used in the practice of this invention. As discussed above, the packed f-structure representation of the Xerox XLE environment efficiently encodes natural language ambiguity by determining a list of context facts for a text structure. The contexted facts are of the form $C_i \rightarrow F_i$, where $C_i$ is a context and $F_i$ is a linguistic fact. The context is typically a set of choices drawn from an and-or forest that represents the ambiguity of the text structure or sentence. Each fact in the packed f-structure representation of the Xerox XLE environment occurs only once in each structure. This normalization of facts facilitates finding and transforming elements. For example, natural language ambiguity may result in multiple possible meanings for a packed f-structure. In the Xerox XLE environment, the packed f-structure encodes the multiple meanings but does not require duplicating the common elements of each meaning. Thus the time necessary to operate on the information contained in a packed f-structure is reduced. After the packed structure is determined, control continues to step S80.

A reduced structure is determined based on transformations applied to elements of the packed structure in step S80. The transformations applied to elements of the packed structure may include, deleting less salient elements, substituting more compact elements and/or changing elements. For example, in various exemplary embodiments according to this invention, facts encoded in the packed f-structure representation of the Xerox XLE are transformed based on transformation rules. The transformation rules encode actions or procedures that reduce the occurrence of less salient information in the exemplary packed structural representation by adding, deleting or changing facts. The resultant reduced packed structure represents an efficient encoding of each possible condensed text structure. After the reduced structures are determined, control continues to step S90.

In step S90, the candidate structures for each reduced packed structure are determined based on a stochastic or predictive disambiguation model of the reduced packed structure. The candidate structures may be determined using stochastic, lexical, semantic or any known or later developed method of disambiguation. For example, in one of the exemplary embodiments according to this invention, statistical analysis of exemplary reduced structures is used. A maximum likelihood disambiguation model is determined for a set of reduced packed structures. A predictive disambiguation model is then used to determine the most likely reduced structure from the packed reduced structure based on property functions such as: attributes; attribute combinations; attribute value-pairs; co-occurrences of verbstems; sub-categorization frames; rule trace information and/or any known or later developed features of the text structures and associated packed structures. For example, in various exemplary embodiments according to this invention, a set of possible summarized structures $S(y)$ for each sentence $y$ in training data

$$\left\{ \left( s_j, y_j \right) \right\}_{j=1}^{m}$$

is determined. The predictive disambiguation model is trained based one the conditional likelihood $L(\lambda)$ of a summarized structure for each given sentence based on the formula:

$$L(\lambda) = \log \prod_{j=1}^{m} \frac{e^{\lambda \cdot f(s_j)}}{\sum_{s \in S(y_j)} e^{\lambda \cdot f(s)}} \qquad (1)$$

where $f$ are the property functions and $y$ and $s$ are original sentence to gold-standard summarized structure pairs. Candidate structures are determined based on the predictive disambiguation model and the reduced packed structure. After the candidate structures are determined, control continues to step S100.

In step S100, the grammatical text structures associated with the most likely candidate structure are determined using the grammatically correct generation grammar and the result is output.

In step S110, a determination is made whether there are additional text structures to condense. If it is determined that there are additional text structures to be condensed, control continues to step S120 where the next text structure is selected. Control then jumps to step S70. Steps S70-S110 are repeated until it is determined that no additional text structures remain. Control then continues to step S130.

The condensed grammatical text structures are output in step S 130. The condensed grammatical text structures may be saved in a file, output to a video display or output to any known or later developed display device. After the condensed text structures are output, control continues to step S 140 and the process ends.

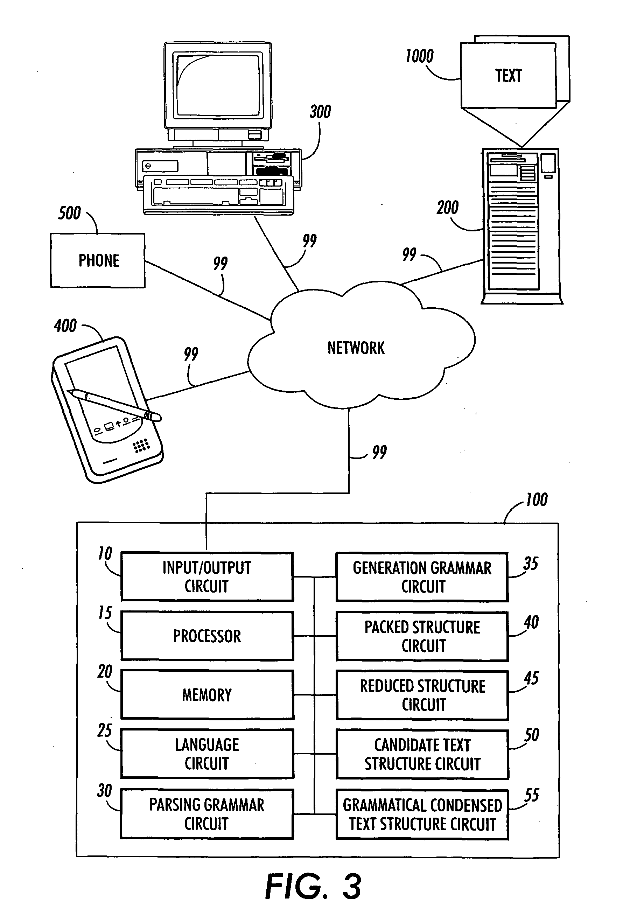

Fig. 3 is an exemplary grammatical text condensation system 100 according to this invention. The grammatical text condensation system 100 is comprised of a processor 15, a memory 20, a language circuit 25, a parsing grammar circuit 30, a generation grammar circuit 35, a packed structure circuit 40, a reduced structure circuit 45, a candidate structure circuit 50 and a grammatical condensed text structure circuit 55, each connected via input/output circuit 10 to communications link 99.

The grammatical text condensation system 100 is connectable via the communications link 99 to an web-enabled computer 300, an web-enabled tablet computing device 400, a telephone 500 and an information repository 200 containing text 1000.

In various exemplary embodiments according to this invention, a user of the web-enabled computer 300 initiates a request for a condensed version of the text 1000 contained in the information repository 200. The condensed version of the text may be used to more quickly identify key concepts contained within the text. Alternatively, the condensed version of the text may be used to determine if the text contains information related to the user's information goals. For example, a condensed version of the text 1000 will require less reading and reviewing time since less salient information is condensed or removed. Condensed versions of the text 1000 are also useful for use on limited screen devices such as web-enabled mobile phones and web-enabled personal digital assistants. In various other exemplary embodiments according to this invention, grammatical condensed condensation is used to determine grammatical condensed versions of the text 1000 for speech synthesizers, tactile displays such as dynamic Braille or any known or later developed display or output method.

The grammatical text condensation system 100 mediates the text condensation request. That is, the request for the condensed version of the text 1000 in information repository 200 is forwarded over communications link 99 to the input/output circuit 10 of the grammatical text condensation system 100 from web-enabled computer system 300. The processor 15 then initiates a request to retrieve the text 1000 from the information repository 200 over communication link 99. The information repository 200 may include but is not limited to, a web server serving documents encoded in HTML, XML and/or WML, a digital library serving documents encoded in Adobe PDF® or Microsoft Word® formats and/or or any known or later developed source of information.

The information repository 200 forwards the requested text 1000 via communications links 99 to the input / output circuit 10 of the grammatical text condensation system 100. The requested text 1000 is then transferred to memory 20. The processor 15 activates the optional language determining circuit 25 to determine the language associated with text 1000. In various exemplary embodiments according to this invention, the language determining circuit 25 uses text feature analysis, embedded language identification tags or any known or later developed method of determining the language of the text.

The processor 15 then activates the parsing grammar circuit to determine the parsing grammar to be applied to the requested text 1000. The parsing grammar may be previously selected and retrieved from the memory 20, dynamically selected based on characteristics of the requested text 1000 or determined using any known or later developed method of determining a parsing grammar. For example, in one of the exemplary embodiments according to this invention, the parsing grammar is selected based on text characteristics such as text language and/or text genre. In various other exemplary embodiments according to this invention, the grammatically correct generation grammar, such as the linguistic functional grammar, may also be used as the parsing grammar. However, it will be apparent that the parsing grammar need not be grammatically correct.

The packed structure circuit 40 is activated to determine packed structures for the requested text 1000. In one exemplary embodiment according to this invention, the packed structural representation of the Xerox XLE is used to efficiently encode ambiguities associated with natural language text. However, it will be apparent that any method of representing text structures may be used in the practice of this invention.

The processor 15 activates the reduced packed structure circuit 45 to reduce elements of the packed structure. The reduced packed structure circuit 45 retrieves the packed structure and previously stored transformation rules from a memory 20, a disk storage or any known or later developed storage device. In various exemplary embodiments according to this invention, the transformations rules are comprised of pattern and action portions. The portions of the packed structure for which a matching pattern portion of a transformation rule is found are transformed based on the action portion of the rule. The transformation rules may be comprised of a single action such as deleting a portion of text or may be composed of multiple actions. It should be noted that although the rules are described as pattern and action pairs, any method of conditionally applying rules to the requested text may be used in the practice of this invention.

The application of the transformations rules to the elements of the packed structure may be used to reduce the occurrence of less salient information in the packed structure. In various other exemplary embodiments according to this invention, the transformation rules may include, but are not limited to, passivization, nominalization or any known or later developed linguistic transformation useful in reducing the occurrence of less salient information.

The processor 15 activates the candidate structure determining circuit 50 to disambiguate the reduced structure. In one exemplary embodiment of this invention, the candidate structure circuit 50 uses a predictive disambiguation model, such as stochastic disambiguation model, to determine candidate structures based on a ranking or likelihood score for each candidate structure. The likelihood score of a candidate structure may be previously determined based on a statistical analysis of text structures and associated reduced structures in a text corpus. The candidate structure circuit 50 then ranks the candidate structures based on the likelihood or rank score.

The grammatical condensed text structure circuit 55 is then activated. The grammatical condensed text structure circuit 55 retrieves the generation grammar from the memory 20 and determines condensed text structures based on a grammatical generation grammar and the candidate structures. The determined grammatical condensed text structures are optionally displayed and/or stored for further processing.

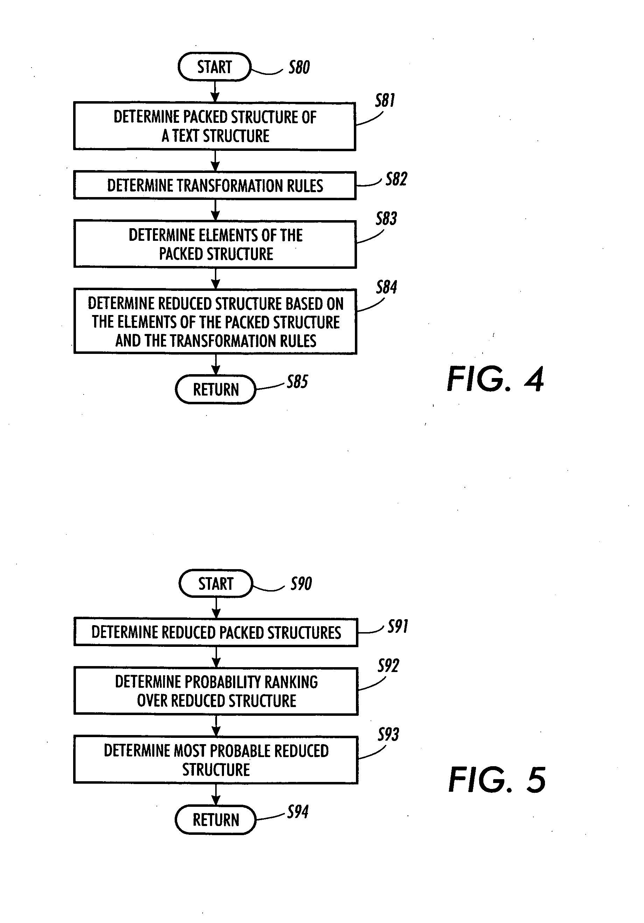

Fig. 4 is an expanded flowchart of an exemplary method for transforming packed structures according to this invention. The process begins a step S80 and immediately continues to step S81. In step S81, a packed structure associated with a previously determined text structure is determined. For example, a text may be segmented into text structures and stored in memory on disk or in a memory store. In various exemplary embodiments according to this invention, the text structures are retrieved from the memory store and/or determined dynamically. After the packed structures for the text are determined, control continues to step S82.

The transformation rules are determined in step S82. The transformation rules may be input by a user, retrieved from a memory store or entered using any known or later developed method without departing from the scope of this invention. The transformation rules may be encoded using the pattern matching techniques of the PERL and/or AWK languages, the encoding associated with the PROLOG and LISP languages or based on any known or later developed method of encoding transformation rules without departing from the scope of this invention. After the transformation rules are determined, control then continues to step S83.

In step S83, the transformation rules associated with the packed structure are determined. The transformation rules may be retrieved from a memory, dynamically entered by the user or determined using any known or later developed technique. The pattern portion of the transformation rule is associated with specific elements in the packed structure such as words or phrases, parts of speech tags or any known or later developed linguistic structure or value.

Thus, an exemplary pattern "adjunct(X, Y)" determines a set of adjuncts Y in text expression X. The action portion of the transformation rule may contain one or more actions to be performed based on pattern portion matches of elements of the packed structure. The action portion of the rule contains actions that add elements to the packed structure, delete elements from the packed structure; change elements of the packed structure, record information about applied transformation rules or perform any known or later developed transformation of the elements of the packed structure. After the transformation rules are determined, control continues to step S84.

A reduced packed structure is determined in step S84, by applying the transformation rules to the elements contained within the packed structure. In one exemplary embodiment according to this invention, transformation rules are applied directly to the packed structures using the techniques described in Maxwell III, copending, co-assigned U.

S. Application Serial No. 10/338,846. The described techniques allow transformation rules to be applied to the elements of the packed structural representation of the XLE environment without unpacking. These techniques reduce the combinatorial expansion problems associated with transforming ambiguous packed structures. Although the packed structure of the XLE environment improves processing efficiencies, it will be apparent that any known or later developed method of encoding text may also be used without departing from the scope of this invention. After the reduced packed structure is determined in step S84, control continues to step S85 and the process returns to step S90 of Fig. 2.

Fig. 5 is an expanded flowchart of an exemplary method of candidate structure determination according to this invention. Control begins at step S90 and immediately continues to step S91.

In step S91 the reduced structures are determined. The reduced structures may be retrieved from memory, disk storage, retrieved from a storage device, determined dynamically or using any known or later developed method. A reduced structure is determined by applying the transformation rules to a packed structure such as a packed f-structure. Typical transformation rules condense elements of the packed structure by removing less salient elements, adding clarifying elements or changing elements to support other operations such as nominalization, passivization and the like. After the reduced structures are determined, control continues to step S92.

A ranking is determined over the reduced structures, in step S92. For example, a statistical ranking of the probability of each reduced structure is determined. Control then continues to step S94.

In step S94, the most probable reduced structure is determined based on the ranking. For example, in various exemplary embodiments according to this invention, the most probable reduced structure may be determined by selecting the most likely structure based on a disambiguation model. The most likely candidate structure is selected and control continues to step S95 where the process returns to step S 100 of Fig. 2.

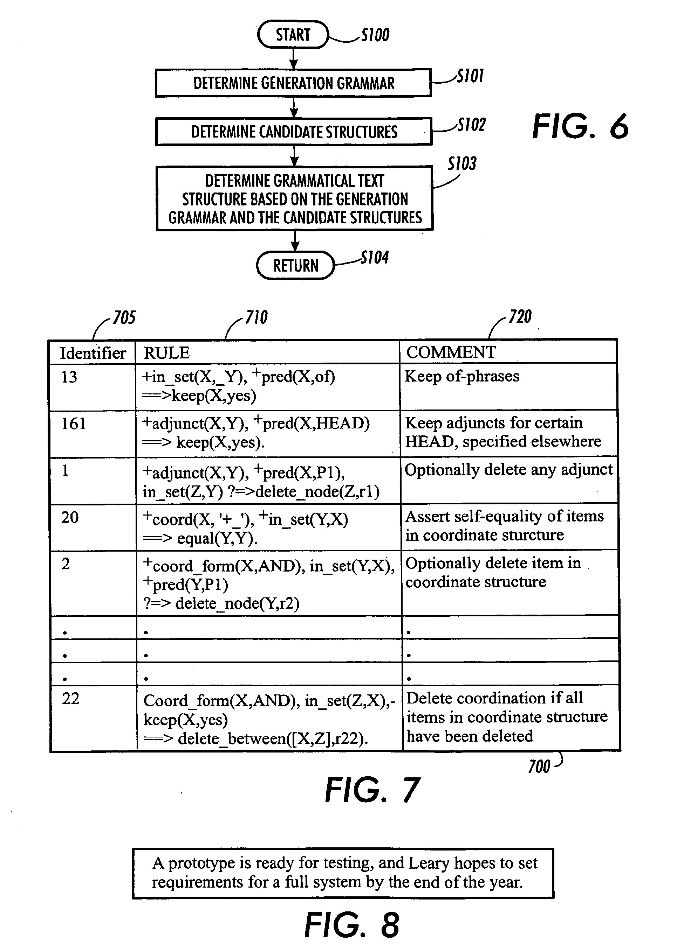

Fig. 6 is a flowchart of an exemplary method of determining candidate text structures according to this invention. The process begins at step S100 and immediately continues to step S101.

In step S 101, a generation grammar is determined. The generation grammar is selected based on previously stored parameters, determined dynamically based on user input or using any known or later developed method of selection. After the generation grammar is determined, control continues to step S102.

The candidate structures are determined in step S102. The candidate structures may be retrieved from a memory, a disk store and the like. After the candidate structures are determined, control continues to step S103.

In step S103, a grammatical sentence is determined based on the previously determined generation grammar and the candidate structures. The generation grammar ensures that all generated sentences are grammatical. In various exemplary embodiments according to this invention, the grammatical sentences may be ranked by percentage sentence length reduction in addition to the ranking of candidates obtained from the stochastic or predictive model. The overall highest ranked sentence derived from the reduced packed structure is selected. The generated grammatical sentences are then output as the grammatical condensed text sentences. In various other exemplary embodiments according to this invention, the grammatical condensed text sentences are optionally saved to a memory store, output to the display and the like. After the grammatical text sentences are determined, control continues to step S104 and the process returns to step S110 of Fig. 2.

Fig. 7 shows an exemplary data structure for storing transformation rules according to this invention. In a first exemplary embodiment, the data structure for storing transformation rules 700 is comprised of a rule identifier portion 705, a rule portion 710 and a comment portion 720. The rule portion 710 is comprised of a pattern portion and an action portion.

The rule identifier portion 705 associates an identifier with each discrete rule The rule identifier may be a numeric identifier, an alphanumeric string or any other known or later developed method of identifying discrete rules. The rule portion 710 of the exemplary data structure for storing transformation rules 700 contains patterns and actions used to match elements of the packed structure and perform transformations. When an element in the packed structure matches the rule portion of the rule 710, the actions contained in the associated action portion of the rule 710 are applied to transform the packed structure. The actions contained in the action portion of the rule 710, may be used to delete elements, add elements, change elements or perform any known or later developed linguistic transformation. The action portion of the rule 710 may contain a single action to be applied to a text or may contain multiple actions. The optional comment portion 720 of the rule contains a comment documenting the actions performed.

The first row entry of the exemplary data structure for storing transformation rules 700 contains "13" in the rule identifier portion 705, "+in_set(X,_Y), PRED(X,of)" in the pattern portion of the rule 710, "keep(X,yes) " in the action portion of the rule 710 and "keep of-phrases" in the comment portion 720.

The rule identifier portion 705 identifies the rule and can be used to develop rule traces or rule histories. The pattern portion of the rule 710, the action portion of the rule 710 and the comment portion 720 comprise the transformation rule for transforming the packed structure. The rules associated with sentence condensation may include, but are not limited to deleting, adding or changing all adjuncts except negatives of a packed structure, deleting parts of co-ordinate structures, performing simplifications and the like. It should be noted that the transformation rules are not constrained to preserve the grammaticality or well-formed-ness of the resultant reduced structure. Thus, some of the resultant reduced packed structures may not correspond to any English language sentence.

The pattern portion of rule portion 710 of the data structure for storing transformation rules 700 contains the value "+in_set(X,_Y), +PRED(X,of)". The "+" indicates that for each structure, the pattern determines of-phrases of the form PRED(X,of).

The action portion of the rule portion 710 of the data structure for storing transformation rules 700 contains the entry "keep(X,yes). This reflects the actions performed when the associated pattern portion is identified in the packed structure. The "keep(X,yes) re-write operation is performed for each packed structure in which term "+in_set (X,_Y), +PRED(X,of)" is identified. The re-write operation action retains each "of-phrase" associated with the expression X.

The second row entry of the exemplary data structure for storing transformation rules 700 contains "161" in the rule identifier portion 705, "+adjunct(X,Y), PRED(X,HEAD)" in the pattern portion of the rule 710, "keep(X,yes) " in the action portion and "keep adjuncts for certain head specified elsewhere" in the comment portion 720.

The third row entry of the exemplary data structure for storing transformation rules 700 contains "1" in the rule identifier portion 705, "+adjunct(X,Y), PRED(X,P 1 ), in_set(Z,Y)" in the pattern portion of the rule 710 and "? =>delete_node(Z,r1)" in the action portion. The "?=>" optional re-write indicator specifies that this rule optionally deletes any adjuncts. The comment portion 720 value "optionally delete any adjunct" clarifies the function of the rule.

The fourth row entry of the exemplary data structure for storing transformation rules 700 contains "20" in the rule identifier portion 705,"coord(X,'+_'), +in_set(Y,X)" in the pattern portion of the rule 710 and "=>equal(Y,Y)" in the action portion. The rule asserts the self-equality of the items in the coordinate structure. The comment portion 720 value clarifies the function of the rule.

The fifth row entry of the exemplary data structure for storing transformation rules 700 contains "2" in the rule identifier portion 705, "coord(X,AND), +in_set(Y,X), pred(Y,P1)" in the pattern portion of the rule 710 and "⇒delete_node (Y,r2)" in the action portion. The rule optionally deletes the item Y from the coordinate structure. The comment portion 720 entry clarifies the function of the rule.

The last row of the exemplary data structure for storing transformation rules 700 contains "22" in the rule identifier portion 705, "coord_form(X,AND), in_set(Z,X), keep(X,yes)" in the pattern portion of the rule 710 and "⇒delete_between([X,Z],r22)" in the action portion. The rule deletes the coordination if all items in the coordinate structure have been deleted. The comment portion 720 entry clarifies the function of the rule. In various exemplary embodiments according to this invention, a flag or setting may be set to record the application of each rule into a rule trace or accumulated rule history. The rule trace or accumulated rule history may be used in later processing.

Fig. 8 shows an exemplary sentence to be condensed containing twenty two words.

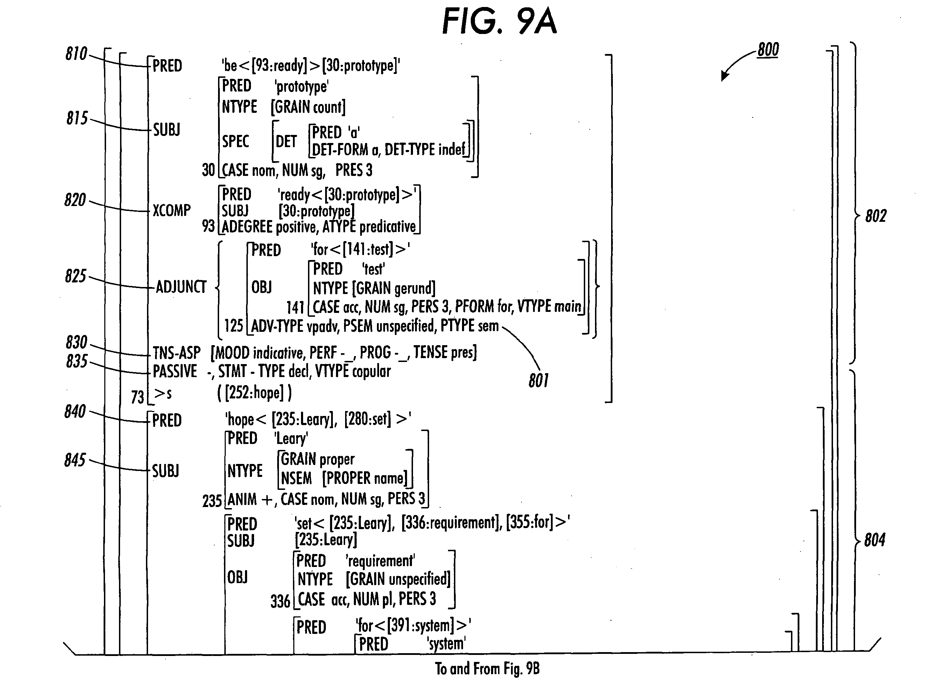

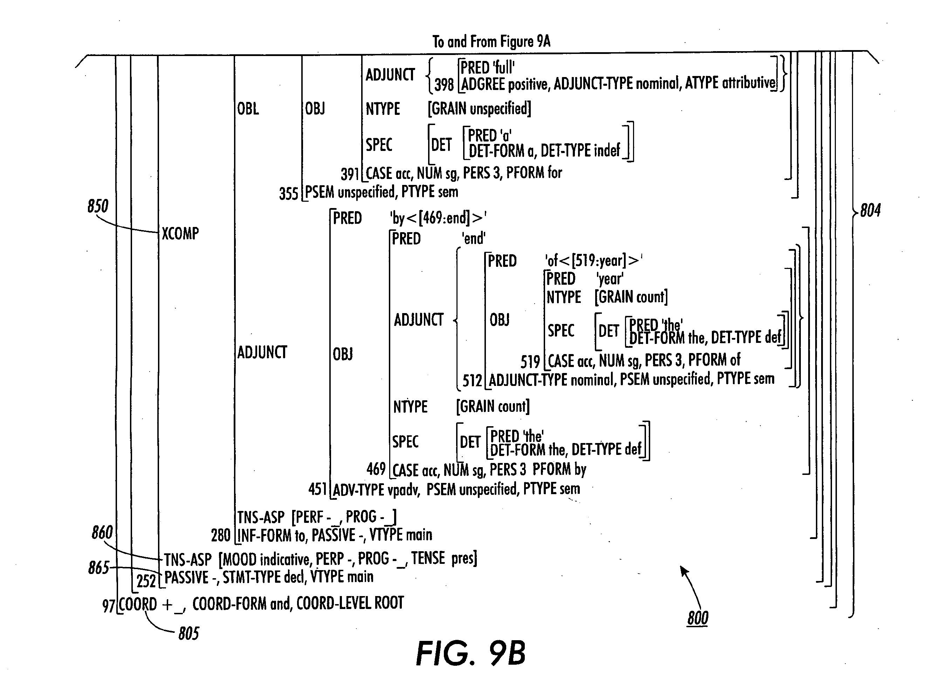

Fig. 9 shows an exemplary un-packed structure 800 associated with the exemplary sentence to be condensed according to this invention. In the first two levels of the structure, the exemplary un-packed structure 800 is comprised of a COORD element 805, PRED elements 810 and 840, SUBJ elements 815 and 845, XCOMP elements 820 and 850, an ADJUNCT element 825, TNS-ASP elements 830 and 860 and PASSIVE elements 835 and 865. An adverbial classification mark 801 at the third level of the structure within the adjunct substructure associates the adjunct with an "ADV-TYPE vpadv, PSEM unspecified, PTYPE sem" classification.

The exemplary packed structure reflects an encoding of the sentencial text structure, "A prototype is ready for testing, and Leary hopes to set requirements for a full system by the end of the year" using a parsing grammar. The exemplary packed structure is comprised of a coordination of the first constituent 802, "a protoype is ready for testing" and the second constituent 804, "Leary hopes to set requirements for a full system by the end of the year."

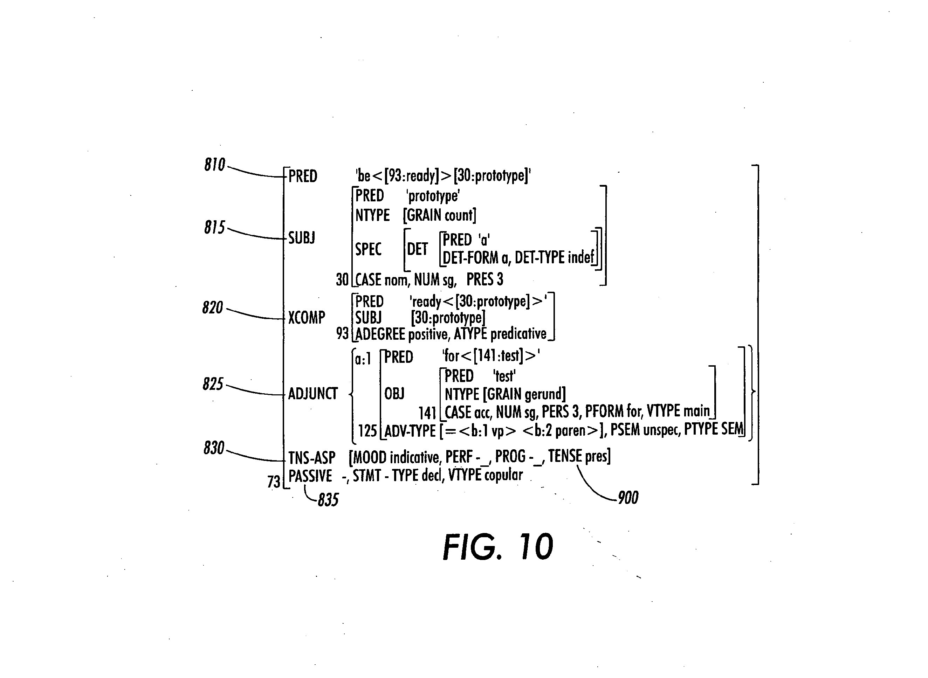

The Fig. 10 shows an exemplary reduced packed structure according to this invention. The reduced packed structure is comprised of a PRED element 810, a SUBJ element 815, and XCOMP element 820, an ADJUNCT element 825, a TSN-ASP element 830 and a PASSIVE element 835. An adverbial classification mark 801 at the third level of the structure within the adjunct substructure encodes the various classifications associated with the adjunct.

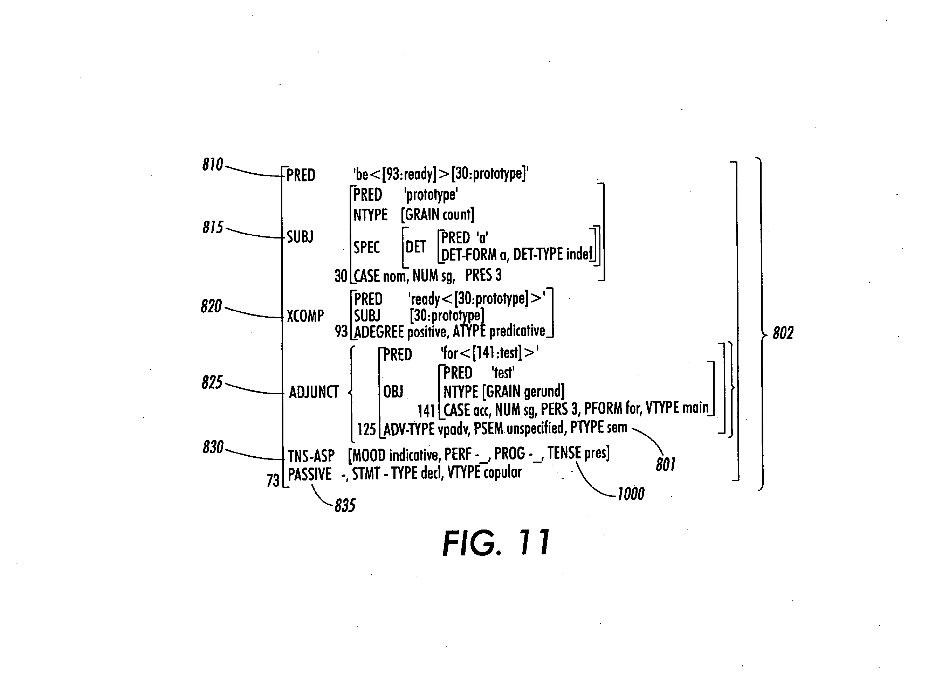

Fig. 11 shows a first exemplary candidate structure 1000 according to this invention. In the first two levels of the structure, the first exemplary candidate structure is comprised of a PRED element 810, a SUBJ element 815, an XCOMP element 820, an ADJUNCT element 825, a TNS-ASP element 830 and a PASSIVE element 835. An adverbial classification mark 801 at the third level of the structure within the adjunct substructure indicates that the adjunct is associated with the "ADV-TYPE vpadv, PSEM unspecified, PTYPE sem" classification.

The first exemplary candidate structure 1000 reflects the application of transformation rules that remove the second constituent 804 in the coordination. That is, the first exemplary data structure has removed the coordination element 805 and the PRED element 840, SUBJ element 845, XCOMP element 850, TNS-ASP element 860 and PASSIVE element 865 associated with the second constituent 804. The most salient information, "a prototype is ready for testing" is retained. However, the less salient information associated with the second constituent 804, "Leary hopes to set requirements for a full system by the end of the year" is removed.

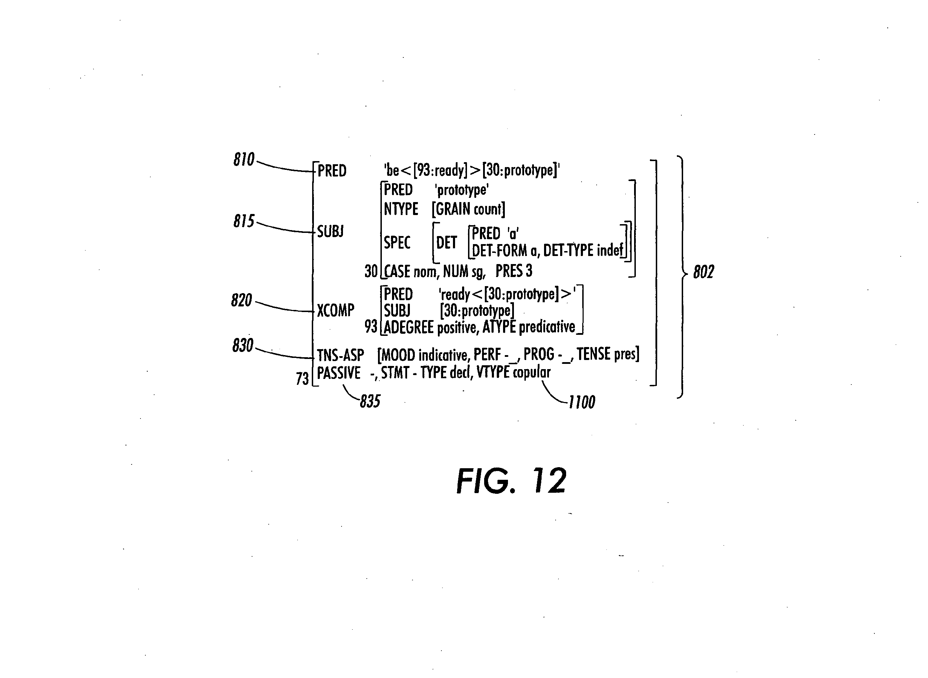

Fig. 12 shows a second exemplary candidate structure 1100 according to this invention. In the first two levels of the structure, the candidate structure 1100 is comprised of a PRED element 810, a SUBJ element 815, an XCOMP element 820, a TNS-ASP element 830 and a PASSIVE element 835.

The second exemplary candidate structure 1100 reflects the application of the transformation rules applied to remove the second constituent 804 and additional rules to remove the ADJUNCT 825. The second exemplary candidate structure reflects the removal of the ADJUNCT structures associated with the first constituent 802. The most salient information, that "a prototype is ready" is retained. However, the less salient adjunct information, "for testing" is removed.

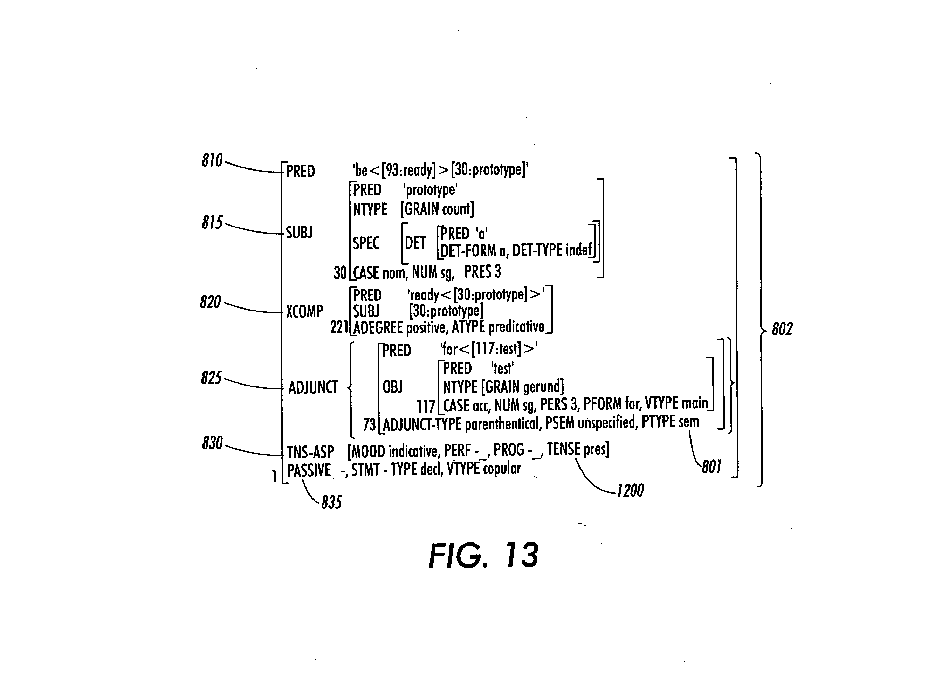

Fig. 13 shows a third exemplary candidate structure 1200 according to this invention. The third exemplary candidate structure 1200 is comprised of a PRED element 810, a SUBJ element 815, an XCOMP element 820, an ADJUNCT element 825, a TNS-ASP element 830 and a PASSIVE element 835, at the first and second levels of the structure. An adjunct classification mark 801 at the third level of the structure within the adjunct substructure indicates that the adjunct is associated with the "ADJUNCT-TYPE parenthetical, PSEM unspecified, PTYPE sem" classification.

The third exemplary candidate structure 1200 reflects the application of a disambiguation model to a reduced packed structure. The disambiguation model may be a stochastic or predictive disambiguation model derived from a corpus of training texts, linguistic rules or any known or later developed disambiguation model. The disambiguation model selects candidate structures which do not necessarily correspond to natural language text or sentence structures.

A grammatically correct generation grammar is then applied to each of the determined candidate structures to produce a probable grammatical text structure or sentence. In this example, ordering of elements in the text structure has changed as indicated by the value of the adjunct classification mark 801. In various exemplary embodiments according to this invention, the grammatical text structures may be ranked by percentage reduction in sentence length in addition to the ranking obtained from the stochastic or predictive model. The overall highest ranked text structure derived from the reduced packed structure is selected. The generated grammatical text structures are then determined and output as grammatical condensed text sentences. In various other exemplary embodiments according to this invention, the grammatical condensed text sentences are optionally saved to a memory store, output to the display and the like.

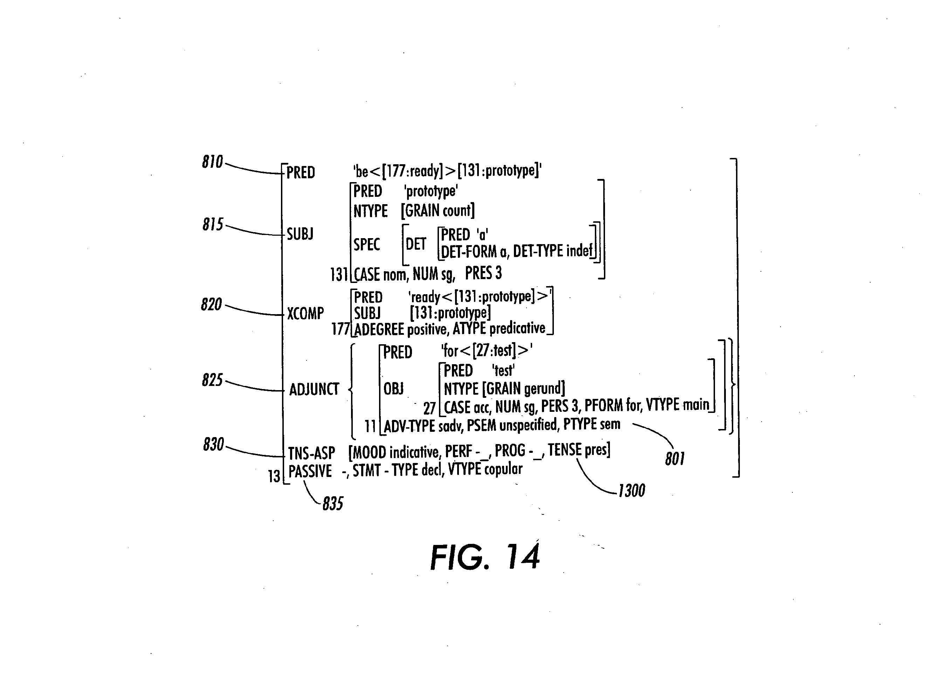

Fig. 14 shows a fourth exemplary candidate structure 1300 according to this invention. In the first two levels of the structure, the fourth exemplary candidate structure is comprised of a PRED element 810, a SUBJ element 815, an XCOMP element 820, an ADJUNCT element 825, a TNS-ASP element 830 and a PASSIVE element 835. An adjunct classification mark 801 at the third level of the structure within the adjunct substructure indicates that the adjunct is associated with an "ADV-TYPE sadv, PSEM unspecified, PTYPE sem" classification.

The fourth exemplary candidate structure 1300 reflects the application of a disambiguation model to a reduced packed structure. As discussed above, in various exemplary embodiments according to this invention, the disambiguation model may be a stochastic disambiguation or predictive model derived from a corpus of training texts, linguistic rules or any known or later developed disambiguation model. The disambiguation model selects candidate structures which do not necessarily correspond to natural language text structures or sentence structures.

A grammatically correct generation grammar is then applied to each candidate structure to produce a probable grammatical text structure or sentence. In this case, the change in the ordering of the elements is indicated by the value of the adjunct classification mark 801. In various exemplary embodiments according to this invention, the grammatical text structures may be ranked by reduction in sentence length in addition to the ranking of candidates obtained from the stochastic or predictive model. The overall highest ranked text structure derived from the reduced packed structure is selected. The generated grammatical text structures having the desired condensation characteristic are then determined and output as the grammatical condensed text sentences. In various other exemplary embodiments according to this invention, the grammatical condensed text sentences are optionally saved to a memory store, output to the display and the like.

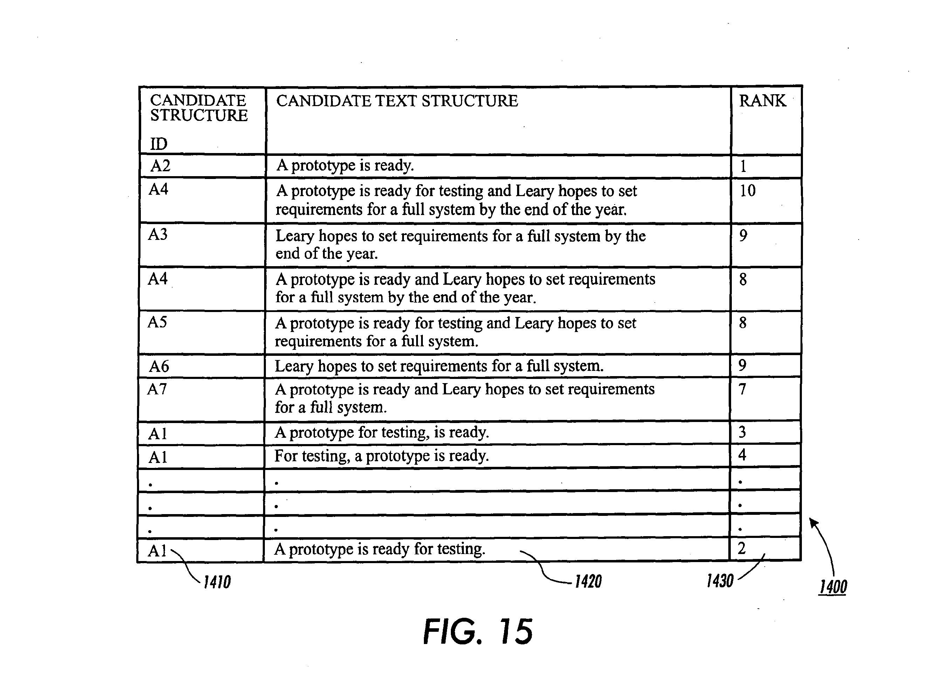

Fig. 15 shows an exemplary candidate text data structure 1400. The candidate text structure data structure 1400 is comprised of a candidate structure id portion 1410, a candidate text structure portion 1420 and a rank portion 1430. The id portion 1410 of the candidate text data structure 1400 identifies the candidate structure from which candidate text structure portion 1420 is generated. A rank portion 1430 indicates a ranking of the candidate text structure, based on the length, grammaticality and relevance of the generated candidate text structure. For example, the first row of the candidate text data structure 1400 contains "A2" in the candidate structure id portion 1410, "a prototype is ready" in the candidate text structure portion 1420 and "1" in the rank portion 1430. This indicates that the candidate text structure "A prototype is ready" generated from the "A2" candidate structure is associated with the highest rank of "1" indicating it is the best condensation for the text structure.

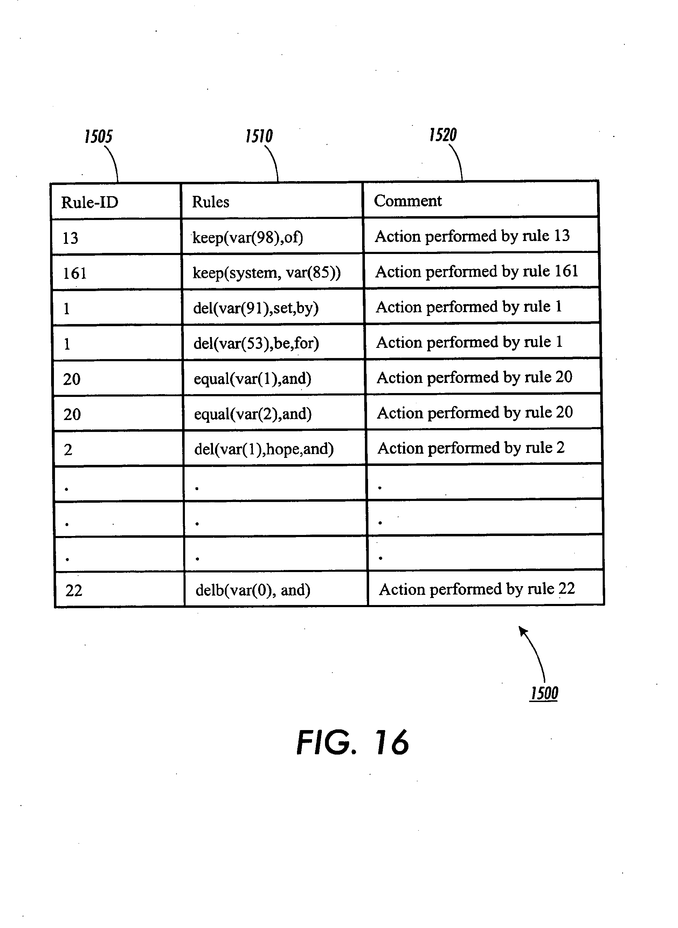

Fig. 16 shows an exemplary rule trace storage structure 1500 according to this invention. The exemplary rule trace storage structure 1500 is comprised of a rule identifier portion 1505, a rule portion 1510 and a comment portion 1520.

The first row of the exemplary rule trace storage structure 1500 has a rule identifier portion 1505 entry of "13". This indicates the rule trace entry is associated with the application of rule 13.

The rule portion 1510 entry "keep(var(98),of)" is one of the discrete actions performed in the application of the rule indicated in the rule identifier portion 1505. The comment portion 1520 of the rule trace storage structure 1500 contains the value "Action performed by rule 13". The comment portion provides commentary on the function of each rule trace entry.

Each of the circuits 10-55 of the grammatical text condensation system 100 outlined above can be implemented as portions of a suitably programmed general-purpose computer. Alternatively, 10-55 of the grammatical text condensation system 100 outlined above can be implemented as physically distinct hardware circuits within an ASIC, or using a FPGA, a PDL, a PLA or a PAL, or using discrete logic elements or discrete circuit elements. The particular form each of the circuits 10-55 of the grammatical text condensation system 100 outlined above will take is a design choice and will be obvious and predicable to those skilled in the art.

Moreover, the grammatical text condensation system 100 and/or each of the various circuits discussed above can each be implemented as software routines, managers or objects executing on a programmed general purpose computer, a special purpose computer, a microprocessor or the like. In this case, grammatical text condensation system 100 and/or each of the various circuits discussed above can each be implemented as one or more routines embedded in the communications network, as a resource residing on a server, or the like. The grammatical text condensation system 100 and the various circuits discussed above can also be implemented by physically incorporating the grammatical text condensation system 100 into a software and/or hardware system, such as the hardware and software systems of a web server or a client device.

As shown in Fig. 3, memory 20 can be implemented using any appropriate combination of alterable, volatile or non-volatile memory or non-alterable, or fixed memory. The alterable memory, whether volatile or non-volatile, can be implemented using any one or more of static or dynamic RAM, a floppy disk and disk drive, a write-able or rewrite-able optical disk and disk drive, a hard drive, flash memory or the like. Similarly, the non-alterable or fixed memory can be implemented using any one or more of ROM, PROM, EPROM, EEPROM, an optical ROM disk, such as a CD-ROM or DVD-ROM disk, and disk drive or the like.

The communication links 99 shown in Figs. 1 and 3 can each be any known or later developed device or system for connecting a communication device to the grammatical text condensation system 100, including a direct cable connection, a connection over a wide area network or a local area network, a connection over an intranet, a connection over the Internet, or a connection over any other distributed processing network or system. In general, the communication links 99 can be any known or later developed connection system or structure usable to connect devices and facilitate communication

Further, it should be appreciated that the communication links 99 can be a wired or wireless links to a network. The network can be a local area network, a wide area network, an intranet, the Internet, or any other distributed processing and storage network.

**Claims**

1. A method of condensing text comprising the steps of:

    determining at least one text structure for a text;
    determining a parsing grammar, a generation grammar and transformation rules;
    determining a packed structure based on the determined text structures;
    determining a reduced packed structure based on the transformations of the packed structure;
    determining candidate structures based on the reduced packed structure and a disambiguation model;
    determining grammatical condensed text structures based the generation grammar and the candidate structures.

2. The method of claim 1, wherein the parsing grammar is at least one of: a lexical functional grammar, a phrase structure grammar and a dependency grammar.

3. The method of claim 1, wherein the generation grammar is at least one of: a lexical functional grammar, a phrase structure grammar and a dependency grammar.

4. The method of claim 1, wherein the transformation rules perform at least one of: adding, deleting, modifying and linguistically transforming.

5. The method of claim 1, wherein the candidate structures are determined based on at least one of: a statistical, a semantic, a syntactic and a lexical disambiguation.

**6.** The method of claim 1, wherein the transformation rules operate on elements of the packed structure.

**7.** The method of claim 6, wherein the elements are linguistic facts and associated linguistic context.

**8.** The method of claim 7, where the transformations rules are applied directly to the linguistic facts of the packed structure.

**9.** The method of claim 6, wherein the step of applying the transformation rules to the packed structure further comprises determining linguistic facts and context of the packed structure and applying the transformation rules to the determined linguistic facts and context.

**10.** A system of condensing text comprising:

an input/output circuit for receiving a text;
a memory;
a processor that determines text structures for the text;
a parsing grammar circuit that determines a parsing grammar;
a packed structure circuit that determines a packed structure for each text structure based on the parsing grammar;
a reduced structure circuit that determines reduced structures for each packed structure based on at least one transformation rule;
a candidate structure circuit that determines candidate structures based on the reduced structures and a disambiguation model;
a generation grammar circuit that determines a generation grammar; and ,
a grammatical condensed text structure circuit that determines a grammatical condensed text structure based on the determined generation grammar and the candidate structures.

**FIG. 1**

START — *S10*

DETERMINE TEXT — *S20*

DETERMINE LANGUAGE — *S30*

DETERMINE A PHARSING FOR THE DETERMINED LANGUAGE — *S40*

DETERMINE A GENERATION GRAMMAR — *S50*

DETERMINE THE FIRST TEXT STRUCTURE — *S60*

DETERMINE PACKED STRUCTURE BASED ON THE TEXT STRUCTURE AND THE PHRASING GRAMMAR — *S70*

DETERMINE REDUCED STRUCTURE BASED ON TRANSFORMS OF THE PACKED STRUCTURE — *S80*

DETERMINE CANDIDATE STRUCTURE BASED ON REDUCED STRUCTURE AND STATISTICAL DISAMBIGUATION — *S90*

DETERMINE GRAMMATICAL TEXT STRUCTURE FROM CANDIDATE STRUCTURES BASED ON THE GENERATION GRAMMAR — *S100*

*S110* ADDITIONAL TEXT STRUCTURES?

YES

*S120* DETERMINE NEXT TEXT STRUCTURE

NO

*S100* OUTPUT CONDENSED GRAMMATICAL TEXT STRUCTURE

END — *S130*

**FIG. 2**

**FIG. 3**

START — S80

DETERMINE PACKED STRUCTURE OF
A TEXT STRUCTURE — S81

DETERMINE TRANSFORMATION RULES — S82

DETERMINE ELEMENTS OF THE
PACKED STRUCTURE — S83

DETERMINE REDUCED STRUCTURE BASED ON
THE ELEMENTS OF THE PACKED STRUCTURE
AND THE TRANSFORMATION RULES — S84

RETURN — S85

**FIG. 4**

START — S90

DETERMINE REDUCED PACKED STRUCTURES — S91

DETERMINE PROBABILITY RANKING
OVER REDUCED STRUCTURE — S92

DETERMINE MOST PROBABLE REDUCED
STRUCTURE — S93

RETURN — S94

**FIG. 5**

START —S100

↓

DETERMINE GENERATION GRAMMAR —S101

↓

DETERMINE CANDIDATE STRUCTURES —S102

**FIG. 6**

↓

S103

DETERMINE GRAMMATICAL TEXT STRUCTURE BASED ON THE GENERATION GRAMMAR AND THE CANDIDATE STRUCTURES

↓

RETURN —S104

| Identifier | RULE | COMMENT |
|---|---|---|
| 13 | +in_set(X,_Y), +pred(X,of) ==>keep(X,yes) | Keep of-phrases |
| 161 | +adjunct(X,Y), +pred(X,HEAD) ==> keep(X,yes). | Keep adjuncts for certain HEAD, specified elsewhere |
| 1 | +adjunct(X,Y), +pred(X,P1), in_set(Z,Y) ?=>delete_node(Z,r1) | Optionally delete any adjunct |
| 20 | +coord(X, '+_'), +in_set(Y,X) ==> equal(Y,Y). | Assert self-equality of items in coordinate sturcture |
| 2 | +coord_form(X,AND), in_set(Y,X), +pred(Y,P1) ?=> delete_node(Y,r2) | Optionally delete item in coordinate structure |
| . | . | . |
| . | . | . |
| . | . | . |
| 22 | Coord_form(X,AND), in_set(Z,X),-keep(X,yes) ==> delete_between([X,Z],r22). | Delete coordination if all items in coordinate structure have been deleted |

705   710   720

700

**FIG. 7**

A prototype is ready for testing, and Leary hopes to set requirements for a full system by the end of the year.

**FIG. 8**

# FIG. 9A

810 ⎡PRED 'be<[93:ready]>[30:prototype]'

815 SUBJ ⎡PRED 'prototype'
NTYPE [GRAIN count]
SPEC [DET ⎡PRED 'a'
DET-FORM a, DET-TYPE indef⎤]
30 [CASE nom, NUM sg, PRES 3]

820 XCOMP ⎡PRED 'ready<[30:prototype]>'
SUBJ [30:prototype]
93 [ADEGREE positive, ATYPE predicative]

825 ADJUNCT { ⎡PRED 'for<[141:test]>'
OBJ ⎡PRED 'test'
NTYPE [GRAIN gerund]
141 [CASE acc, NUM sg, PERS 3, PFORM for, VTYPE main]
125 [ADV-TYPE vpadv, PSEM unspecified, PTYPE sem } 801

830 TNS-ASP [MOOD indicative, PERF -_, PROG -_, TENSE pres]
835 PASSIVE -, STMT - TYPE decl, VTYPE copular

73 [ >s ([252:hope]) ]

840 ⎡PRED 'hope< [235:Leary], [280:set] >'

845 SUBJ ⎡PRED 'Leary'
NTYPE [GRAIN proper
NSEM [PROPER name]]
235 [ANIM +, CASE nom, NUM sg, PERS 3]

⎡PRED 'set< [235:Leary], [336:requirement], [355:for]>'
SUBJ [235:Leary]
OBJ ⎡PRED 'requirement'
NTYPE [GRAIN unspecified]
336 [CASE acc, NUM pl, PERS 3]

⎡PRED 'for<[391:system]>'
⎡PRED 'system'

800

802

804

To and From Fig. 9B

```
                                      ADJUNCT  {      PRED 'full'
                                                   398 ADGREE positive, ADJUNCT-TYPE nominal, ATYPE attributive  }
               OBL      OBJ           NTYPE     [GRAIN unspecified]

                                      SPEC      [DET  PRED 'a'
                                                      DET-FORM a, DET-TYPE indef ]
                                 391 CASE acc, NUM sg, PERS 3, PFORM for
                          355 PSEM unspecified, PTYPE sem

850                                   PRED      'by<[469:end]>'
                                              PRED      'end'
         XCOMP                                                    PRED      'of<[519:year]>'                                     804
                                                                             PRED    'year'
                                                                             NTYPE  [GRAIN count]
                                              ADJUNCT  {  OBJ
                                                                             SPEC   [DET  PRED 'the'
                                                                                          DET-FORM the, DET-TYPE def]
                                                                    519 CASE acc, NUM sg, PERS 3, PFORM of
                                                             512 ADJUNCT-TYPE nominal, PSEM unspecified, PTYPE sem
         ADJUNCT      OBJ

                                              NTYPE     [GRAIN count]

                                              SPEC      [DET  PRED 'the'
                                                              DET-FORM the, DET-TYPE def]
                                      469 CASE acc, NUM sg, PERS 3 PFORM by
                               451 ADV-TYPE vpadv, PSEM unspecified, PTYPE sem

         TNS-ASP [PERF - , PROG - ]
860  280 INF-FORM to, PASSIVE -, VTYPE main

865  TNS-ASP [MOOD indicative, PERP -, PROG -_, TENSE pres]
     252 PASSIVE -, STMT-TYPE decl, VTYPE main

97 COORD +_, COORD-FORM and, COORD-LEVEL ROOT                              800
         805
```

## FIG. 9B

EP 1 486 885 A2

EP 1 486 885 A2

810 ─ PRED       'be<[93:ready]>[30:prototype]'

815 ─ SUBJ       ⎡PRED     'prototype'
                  ⎢NTYPE    [GRAIN count]
                  ⎢SPEC     [DET ⎡PRED 'a'
                  ⎢                ⎣DET-FORM a, DET-TYPE indef⎦]
                  30⎣CASE nom, NUM sg,   PRES 3⎦

820 ─ XCOMP      ⎡PRED      'ready<[30:prototype]>'
                  ⎢SUBJ      [30:prototype]
                  93⎣ADEGREE positive, ATYPE predicative⎦

825 ─ ADJUNCT    { a:1 ⎡PRED      'for<[141:test]>'
                  ⎢OBJ       ⎡PRED     'test'
                  ⎢           ⎢NTYPE [GRAIN gerund]
                  ⎢           141⎣CASE acc, NUM sg, PERS 3, PFORM for, VTYPE main⎦
                  125⎣ADV-TYPE [=<b:1 vp> <b:2 paren>], PSEM unspec, PTYPE SEM⎦ }

830 ─ TNS-ASP    [MOOD indicative, PERF -_, PROG -_, TENSE pres]
      73 PASSIVE  -, STMT - TYPE decl, VTYPE copular
                  835                                         900

# FIG. 10

*FIG. 11*

810 — PRED    'be<[93:ready]>[30:prototype]'

815 — SUBJ
    30
    PRED    'prototype'
    NTYPE   [GRAIN count]
    SPEC    [DET [PRED 'a'; DET-FORM a, DET-TYPE indef]]
    CASE nom, NUM sg, PRES 3

820 — XCOMP
    93
    PRED    'ready<[30:prototype]>'
    SUBJ    [30:prototype]
    ADEGREE positive, ATYPE predicative

825 — ADJUNCT
    125
    PRED    'for<[141:test]>'
    OBJ
        141
        PRED    'test'
        NTYPE [GRAIN gerund]
        CASE acc, NUM sg, PERS 3, PFORM for, VTYPE main
    ADV-TYPE vpadv, PSEM unspecified, PTYPE sem

830 — TNS-ASP   [MOOD indicative, PERF -_, PROG -_, TENSE pres]
73   PASSIVE   -, STMT - TYPE decl, VTYPE copular
835

801
1000
802

EP 1 486 885 A2

21

810 — PRED    'be < [93:ready] > [30:prototype]'

815 — SUBJ    ⎡ PRED    'prototype'
              ⎢ NTYPE    [GRAIN count]
              ⎢
              ⎢ SPEC    [ DET  ⎡ PRED 'a'
              ⎢               ⎣ DET-FORM a, DET-TYPE indef ] ]
           30 ⎣ CASE nom, NUM sg,   PRES 3 ⎦

820 — XCOMP   ⎡ PRED     'ready < [30:prototype] > '
              ⎢ SUBJ     [30:prototype]
           93 ⎣ ADEGREE positive, ATYPE predicative ⎦

830 — TNS-ASP   [MOOD indicative, PERF - , PROG - , TENSE pres]
       73  PASSIVE  - , STMT - TYPE decl, VTYPE copular

           835                              1100

           802

## FIG. 12

810 — PRED     'be<[93:ready]>[30:prototype]'

815 — SUBJ
```
     ⎡ PRED    'prototype'                                      ⎤
     ⎢ NTYPE   [GRAIN count]                                    ⎥
     ⎢                      ⎡     ⎡ PRED 'a'                 ⎤⎤ ⎥
     ⎢ SPEC     ⎢ DET ⎢ DET-FORM a, DET-TYPE indef ⎥⎥ ⎥
  30 ⎣ CASE nom, NUM sg,   PRES 3                              ⎦
```

820 — XCOMP
```
      ⎡ PRED      'ready<[30:prototype]>'      ⎤
      ⎢ SUBJ      [30:prototype]               ⎥
  221 ⎣ ADEGREE positive, ATYPE predicative    ⎦
```

825 — ADJUNCT
```
    ⎧ ⎡ PRED      'for<[117:test]>'                                        ⎤
    ⎪ ⎢          ⎡ PRED    'test'                                    ⎤     ⎥
    ⎨ ⎢ OBJ      ⎢ NTYPE [GRAIN gerund]                              ⎥     ⎥
    ⎪ ⎢      117 ⎣ CASE acc, NUM sg, PERS 3, PFORM for, VTYPE main ⎦     ⎥
    ⎩ ⎣   73 ADJUNCT-TYPE parenthentical, PSEM unspecified, PTYPE sem    ⎦
```

830 — TNS-ASP   [MOOD indicative, PERF -_, PROG -_, TENSE pres]

  1   PASSIVE   -, STMT - TYPE decl, VTYPE copular

835

1200

801

802

## FIG. 13

EP 1 486 885 A2

810 ⌈PRED  'be<[177:ready]>[131:prototype]'

815 SUBJ
　　PRED  'prototype'
　　NTYPE  [GRAIN count]
　　SPEC  [DET [PRED 'a'  DET-FORM a, DET-TYPE indef]]
　131 [CASE nom, NUM sg,  PRES 3]

820 XCOMP
　　PRED  'ready<[131:prototype]>'
　　SUBJ  [131:prototype]
　177 [ADEGREE positive, ATYPE predicative]

825 ADJUNCT
　　PRED  'for<[27:test]>'
　　OBJ
　　　PRED  'test'
　　　NTYPE [GRAIN gerund]
　　　27 [CASE acc, NUM sg, PERS 3, PFORM for, VTYPE main]
　11 [ADV-TYPE sadv, PSEM unspecified, PTYPE sem]  801

830 TNS-ASP  [MOOD indicative, PERF -_, PROG -_, TENSE pres]  1300
　13 [PASSIVE -, STMT - TYPE decl, VTYPE copular]
　835

**FIG. 14**

| CANDIDATE STRUCTURE ID | CANDIDATE TEXT STRUCTURE | RANK |
|---|---|---|
| A2 | A prototype is ready. | 1 |
| A4 | A prototype is ready for testing and Leary hopes to set requirements for a full system by the end of the year. | 10 |
| A3 | Leary hopes to set requirements for a full system by the end of the year. | 9 |
| A4 | A prototype is ready and Leary hopes to set requirements for a full system by the end of the year. | 8 |
| A5 | A prototype is ready for testing and Leary hopes to set requirements for a full system. | 8 |
| A6 | Leary hopes to set requirements for a full system. | 9 |
| A7 | A prototype is ready and Leary hopes to set requirements for a full system. | 7 |
| A1 | A prototype for testing, is ready. | 3 |
| A1 | For testing, a prototype is ready. | 4 |
| . | . | . |
| . | . | . |
| . | . | . |
| A1 | A prototype is ready for testing. | 2 |

1410  1420  1430  1400

## FIG. 15

EP 1 486 885 A2

| Rule-ID | Rules | Comment |
|---------|-------|---------|
| 13 | keep(var(98),of) | Action performed by rule 13 |
| 161 | keep(system, var(85)) | Action performed by rule 161 |
| 1 | del(var(91),set,by) | Action performed by rule 1 |
| 1 | del(var(53),be,for) | Action performed by rule 1 |
| 20 | equal(var(1),and) | Action performed by rule 20 |
| 20 | equal(var(2),and) | Action performed by rule 20 |
| 2 | del(var(1),hope,and) | Action performed by rule 2 |
| . | . | . |
| . | . | . |
| . | . | . |
| 22 | delb(var(0), and) | Action performed by rule 22 |

1505    1510    1520

1500

# FIG. 16